(19) **Europäisches Patentamt**
**European Patent Office**
**Office européen des brevets**

(11) **EP 1 453 710 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **02787725.7**

(22) Anmeldetag: **19.11.2002**

(51) Int Cl.:
***B60T 8/00*** *(2006.01)*

(86) Internationale Anmeldenummer:
**PCT/EP2002/012936**

(87) Internationale Veröffentlichungsnummer:
**WO 2003/045751 (05.06.2003 Gazette 2003/23)**

(54) **VERFAHREN ZUR VERBESSERUNG DES REGELVERHALTENS EINES BLOCKIERSCHUTZREGELUNGSSYSTEMS BEI BREMSVORGÄNGEN AUF HOHEM REIBWERT**

METHOD FOR IMPROVING THE CONTROL RESPONSE OF AN ANTILOCK CONTROL SYSTEM DURING BRAKING OPERATIONS IN THE EXISTENCE OF A HIGH COEFFICIENT OF FRICTION

PROCEDE POUR AMELIORER LA TENUE DE REGLAGE D'UN SYSTEME DE REGLAGE ANTIBLOCAGE DANS DES PROCESSUS DE FREINAGE A HAUT COEFFICIENT DE FROTTEMENT

(84) Benannte Vertragsstaaten:
**DE FR IT**

(30) Priorität: **26.11.2001 DE 10157631**
**06.06.2002 DE 10225121**

(43) Veröffentlichungstag der Anmeldung:
**08.09.2004 Patentblatt 2004/37**

(73) Patentinhaber: **Continental Teves AG & Co. oHG 60488 Frankfurt (DE)**

(72) Erfinder:
• **BATISTIC, Ivica**
  **60385 Frankfurt/M (DE)**
• **FENNEL, Helmut**
  **65812 Bad Soden (DE)**

(56) Entgegenhaltungen:
**EP-A- 0 560 271**  **US-A- 5 775 785**
**US-A- 6 109 704**

**Beschreibung**

Blockierschutzregelungsvorgänge finden in allen Reibwertbereichen statt, angefangen bei sehr geringen Reibungskoeffizienten ($\mu < 0,1$) auf Eis bis hin zu hohen Reibungskoeffizienten ($\mu \approx 1$) auf trockenem Asphalt.

Zum Erreichen eines möglichst kurzen Bremsweges ist es besonders wichtig, dass bei Bremsvorgängen auf Fahrbahnen mit hohem Reibungskoeffizienten die Blockierschutzregelungssysteme (ABS-Regelungssysteme) ihre Regelungstätigkeit nicht aufnehmen, bevor das Maximum der sogenannten $\mu$-Schlupfkurve erreicht ist. Anderenfalls würde das ABS-System das Potenzial des Reifens nicht nutzen; es würde den Reifen regelrecht in der Entfaltung der $\mu$-Schlupfkurve behindern; die Haftungsfähigkeiten des Reifens würde nicht voll ausgenutzt.

Damit das nicht passieren kann, muss die Auslegung der Regelungsschwellen für die ABS-Bremsung bzw. der Regelungseintrittschwellen nach den Gegebenheiten auf Hochreibwert erfolgen. Ein gattungsgemäßes ABS-Regelungsverfahren ist aus der EP 0560271 bekannt.

In der letzten Zeit wird von der Fachpresse im zunehmenden Maße die Bremsleistung, insbesondere die Bremsleistung oder der Bremsweg auf trockenem Asphalt, als das entscheidende Kriterium für die Güte des getesteten ABS-Systems bewertet. Die meisten Automobilhersteller messen daher diesen Tests eine hohe Bedeutung bei.

In manchen dieser Tests weisen die Fahrzeuge sehr hohe Verzögerungswerte auf. Dieselben Fahrzeuge, sobald sie mit anderen Reifen ausgerüstet sind, zeigen bei vergleichbaren Tests deutlich abweichende Bremsleistung.

Natürlich kann der Unterschied in der Leistung dadurch entstehen, dass die Messbedingungen, z.B. durch Differenzen im Fahrbahnreibungskoeffizienten, voneinander abweichen.

Die gezielten Untersuchungen zeigen jedoch, dass sich die Reifen zum Teil deutlich in der Höhe des Kraftschlusses, d.h. in der Höhe des übertragbaren $\mu$ aus der $\mu$-Schlupfkurve unterscheiden. Diese Tatsache erklärt die deutlichen Unterschiede in der Bremsleistung zwischen unterschiedlichen Reifenmarken und -typen unter sonst gleichen Bedingungen (d.h. identischem Fahrzeug, auf derselben Teststrecke, bei gleichen klimatischen Bedingungen etc.).

Es gilt, mit den unterschiedlichen Reifen so umzugehen, dass das Potenzial eines jeden Reifens auf bestmögliche Art und Weise genutzt wird. Dies bedeutet, dass einerseits die Reifen mit niedrigeren übertragbaren Haftwerten ($\mu$) nicht überbremst werden (d.h. wegen verzögerten Einsatzes der ABS-Regelung zu stark in den Bremsschlupf gezogen werden) dürfen und dass andererseits die Reifen mit höheren übertragbaren $\mu$ nicht unterbremst werden sollten (d.h. wegen verfrühten Einsatzes der ABS-Regelung gar nicht in den Bremsschlupf gezogen werden), vielmehr soll die ABS-Regelung so ausgelegt sein, dass jeder Reifen nach seinem Optimum geregelt wird.

Die in Serie eingesetzten Blockierschutzregelungssysteme (ABS-Systeme) verfügen, bis auf wenige Ausnahmen im allradgetriebenen Bereich, nicht über Längsbeschleunigungssensoren. Daher ist die Ermittlung einer fahrbahnabhängigen maximalen Verzögerung nur über die Radgeschwindigkeitssignale möglich. So lange die Räder nicht gebremst werden, stellt die Ermittlung der Fahrzeugverzögerung kein besonderes Problem dar. Jedoch bei einer Vollbremsung liegt die Sache ganz anders, denn die Räder sind immer schlupfbehaftet. In diesem Falle lässt sich die Fahrzeuggeschwindigkeit und die Fahrzeugverzögerung $a_{FZ} = \Delta v_{FZ}/\Delta t$ mit den bekannten Verfahren durch Ermittlung und logische Verknüpfung des Raddrehverhaltens der einzelnen Räder und Auswahl bestimmter Regelphasen nur näherungsweise ermitteln.

Bei Blockierschutzregelungssystemen stellt die Verzögerung $a = \Delta v/\Delta t$, ermittelt entweder nach dem bekannten Verfahren oder gemessen mittels eines Längsbeschleunigungssensors, den Eingangswert in einem Progressionsterm dar, der zur Berechnung der Regelungsschwellen und Regelungseintrittsschwellen der Blockierschutzregelung (ABS-Regelung) herangezogen wird. Die Verzögerung und die sogenannte Gegenkopplung bestimmen den Einsatz der ABS-Regelung. Die Gegenkopplung stellt den Radverzögerungswert dar, bei dem der stabile Ast der $\mu$-Schlupfkurve noch nicht verlassen worden ist, d.h. sich der Radschlupf "noch nicht zeigt", weil der höchste übertragbare Kraftschluss oder Reibwert ($\mu$-Wert) noch nicht erreicht ist, oder kurz gesagt, bei dem die ABS-Regelung noch nicht eingesetzt hat, falls sie richtig ausgelegt ist.

Zur Berechnung der Regelungseintrittsschwellen wird die Gegenkopplung von der aktuell anliegenden Radverzögerung $a_{Rad}$ abgezogen. Erst wenn die Radverzögerung den Gegenkopplungswert überschreitet, wird dies als Blockiertendenz identifiziert und die Abweichung von der Gegenkopplung erfasst, integriert und ausgewertet. Das Integral stellt ein wesentliches Kriterium für die Erkennung einer ABS-Situation, d.h. einer ABS-Regelung bzw. einer Blockiertendenz dar.

Ist der Wert der Gegenkopplung oder der Regelungsschwelle zu niedrig, wird ein Reifen mit relativ hohem übertragbaren Haftwert ($\mu$) zu früh, d.h. noch im stabilen Bereich der $\mu$-Schlupfkurve, in die ABS-Regelung geführt und damit regelrecht gehindert, den momentan vorhandenen Haftwert Reifen/Straße auszunutzen; der Bremsweg wird länger als dies in Anbetracht der Straßenverhältnisse und der Haftungsfähigkeit des Reifens notwendig wäre.

Ist dagegen der Wert der Gegenkopplung oder der Regelungsschwelle zu hoch, wird ein Reifen mit relativ niedrigem übertragbaren Haftwert ($\mu$) zu spät, nämlich erst weit im instabilen Bereich der $\mu$-Schlupfkurve, in die ABS-Regelung geführt und damit regelrecht in tiefen Schlupf, bis hin zum Blockieren, gezwungen. Die Folge davon wäre eine "inhomogene" ABS-Regelung mit exzessiver Druckmodulation; dies würde zu erheblichen Komforteinbußen und zu einer erheblicher Verschlechterung der Bremsleistung führen.

Der Erfindung liegt daher die Aufgabe zugrunde, ein Verfahren zu entwickeln, mit dem ein ABS-Regelungssystem den unterschiedlichen, vom Rad bzw. von der Reifenart abhängigen Haftwerten noch besser angepasst werden kann.

Es hat sich herausgestellt, dass diese Aufgabe durch das im Anspruch 1 genannte Verfahren zu lösen ist.

Das zuvor beschriebene Ziel der individuellen Anpassung des ABS-Regelsystems an die Reifen, lässt sich grundsätzlich auf zwei Wegen erreichen, nämlich durch Erhöhung der Regelungsschwellen und/oder durch Erhöhung der Gegenkopplung in Abhängigkeit von den jeweiligen Gegebenheiten.

Nach einer Ausführungsart der Erfindung werden die Regelungsschwellen, von denen das Einsetzen der Blokkierschutzregelung abhängig ist, durch Erhöhung der Gegenkopplung (F) nach der Beziehung

$$F = F_0 + k_{g0} * (a-a_0) + k_{g1} * (a-a_1)...+ k_{gn} * (a-a_n)$$

$$(1)$$

progressiv erhöht, wobei mit "$F_0$ = Feedback$_0$" der minimale Gegenkopplungswert bezeichnet ist, wobei "$a_0$" den Eingangswert, bei dem die Progression einsetzt, darstellt, wobei die Größen "$a_{1...n}$" Fahrzeugverzögerungswerte sind, bei deh die Progression umgeschaltet wird, und wobei "a" die aktuelle Fahrzeugverzögerung und "$k_{g0...gn}$" Bewertungsfaktoren sind.

Ein anderes Ausführungsbeispiel der Erfindung besteht darin, dass die Regelungsschwellen (Th), von denen das Einsetzen der Blockierschutzregelung abhängig ist, nach der Beziehung

$$Th = Th_0 + k_{ao} * (a-a_0) + k_{a1} * (a-a_1)...+ k_{an} * (a-a_n). \qquad (2)$$

progressiv erhöht werden. In diesem Fall ist "Th"$_0$ der minimale Schwellenwert, "$a_0$" der Eingangswert der Fahrzeugverzögerung, bei dem die Progression einsetzt; die Größen "$a_{1...n}$" sind Fahrzeugverzögerungswerte, bei den die Progression umgeschaltet wird; "a" ist die aktuelle Fahrzeugverzögerung und sind "$k_{a0...an}$" Bewertungsfaktoren.

Die Erhöhung muss in beiden Fällen von der Fahrzeugverzögerung progressiv abhängig sein. Die Begriff "Regelungsschwellen" bezieht sich auf Beschleunigungsschwellen oder daraus abgeleitete Schwellen, wie z.B. diverse Ableitungen oder Integrale sowie Schlupfschwellen und Referenzgeschwindigkeit.

In beiden Fällen, d.h. bei Anpassung der Regelungsschwellen und der Gegenkopplung, werden die Eintrittsschwellen direkt oder indirekt über die gemessene oder errechnete Fahrzeugverzögerung beeinflusst.

Die Progression setzt bei der Fahrzeugverzögerung ein, die von den "schwächsten" Reifen erreichbar ist. Einen in der Praxis relevanten Wert stellt die Fahrzeugverzögerung von ca. 1 bis 1,1g ( "g" bedeutet die Erdbeschleunigungskonstante) dar. Hierzu müssen natürlich bei Bergauf- oder Bergabfahrt bestimmte Festwerte addiert werden.

Alle Reifen, die diesen Eingangswert erreichen, ohne dass die ABS-Regelung einsetzt, bauen naturgemäß eine höhere Fahrzeugverzögerung auf und erhöhen automatisch die Regelungsschwellen oder die Gegenkopplung. Auf diese Weise werden die Reifen mit höherem Kraftschluss zwangsläufig mit einer höheren Schwelle oder Gegenkopplung geregelt.

Die beigefügten Abbildungen und Diagramme dienen zur näheren Erläuterung der Funktionsweise der Erfindung. Es zeigen

Fig.1    in Form von Funktionsblöcken wesentliche Komponenten eines ABS-Regelungssystems,

Fig.2,3    Diagramme zur Veranschaulichung des Verlaufs der Rad- und die Fahrzeuggeschwindigkeit sowie der Radbeschleunigung in der Anfangsphase eines ABS-Regelungsvorgangs und

Fig.4,5    Diagramme zur Veranschaulichung der Funktionsweise bei Anwendung einer progressiven Gegenkopplung.

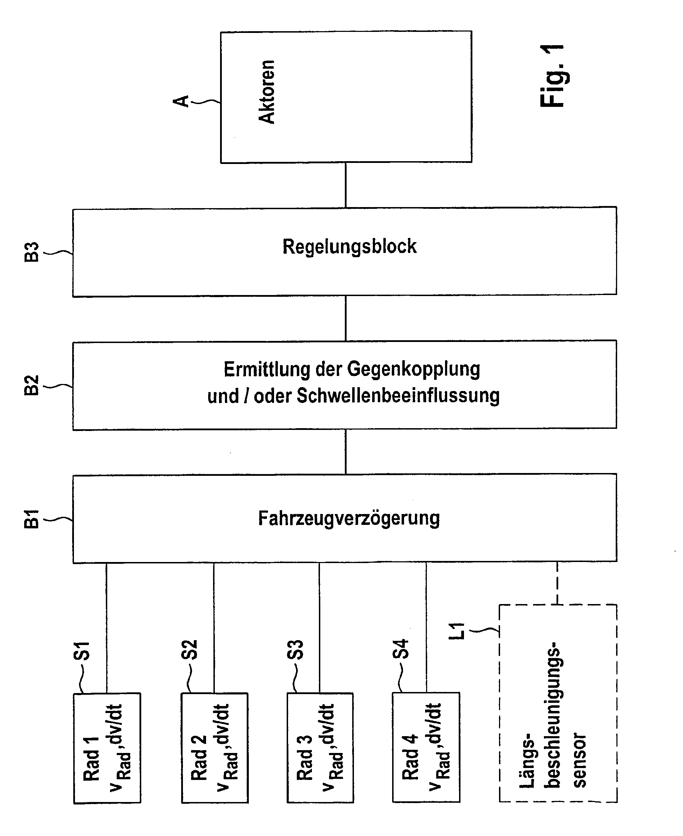

Nach dem in Fig. 1 symbolisch dargestellten Grundprinzip eines ABS-Regelungssystems werden mit Hilfe von Radsensoren S1 bis S4, die das Drehverhalten (Geschwindigkeit $v_{Rad}$ und Beschleunigung dv/dt) der einzelnen Fahrzeugräder Rad 1 bis Rad 4 wiedergeben, die Eingangssignale des Regelungssystems gewonnen. Zusätzlich kann ein Beschleunigungssensor L1 zur Bestimmung der Längsbeschleunigung des Fahrzeugs installiert werden.

Solche Schaltungsvarianten sind bekannt. Aus diesen Messgrößen wird in einer als Block dargestellten Schaltung B1 eine Fahrzeug(referenz)geschwindigkeit ermittelt, deren Änderung schließlich die Fahrzeugbeschleunigung bzw. Fahrzeugverzögerung $a_{FZ}$ darstellt.

Die erfindungsgemäße Gegenkopplung und/oder Schwellenbeeinflussung symbolisiert B2. In B3 werden in herkömmlicher Weise die vorgenannten Daten verarbeitet, um Steuerungssignale für Aktuatoren A, speziell für Bremsdruck- oder Bremskraftaktuatoren zur Regelung des Bremsdruckes oder der Bremskraft an den einzelnen Fahrzeugrädern, zu gewinnen.

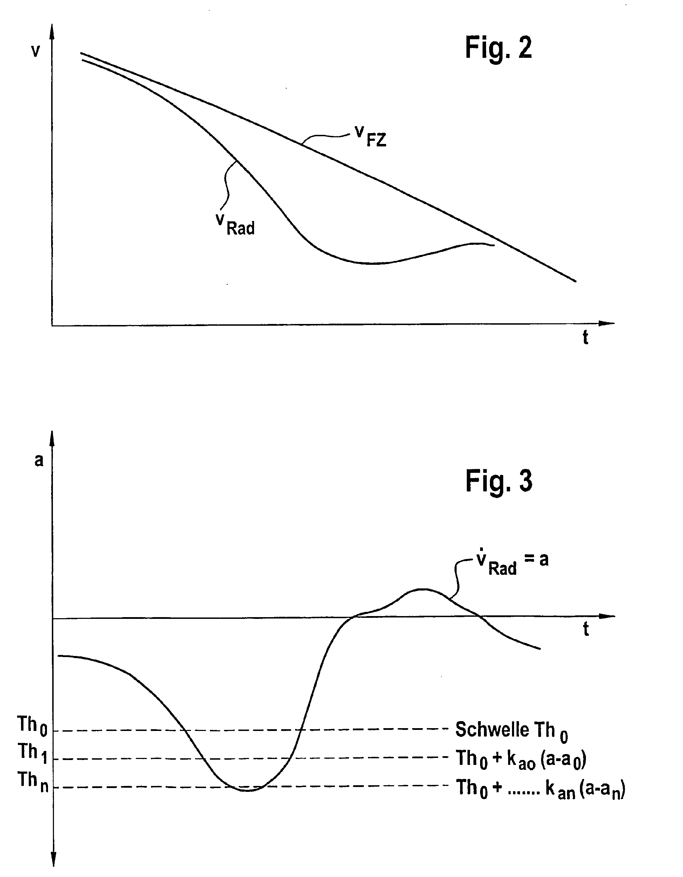

In den Fig. 2 und 3 sind die Fahrzeuggeschwindigkeit $v_{FZ}$ und die Geschwindigkeit $v_{Rad}$ des hier betrachteten, geregelten Rades sowie und die Änderung oder zeitliche Ableitung dieser Radgeschwindigkeit $a_{Rad}$ dargestellt. Die in folgenden erläuterten Werte für die erfindungsgemäße, stufenweise Anpassung der Regelungsschwellen sind ebenfalls in Fig. 3 eingetragen.

Die Erhöhung der Schwellen Th wird nach folgender Gleichung (1) durchgeführt; für die progressive Schwellenwertbildung gilt:

$$Th_0 = Basisschwelle$$

$$Th_1 = Th_0 + k_{ao} * (a - a_0)$$

$$Th_n = Th_0 + Th_1 \ldots + k_{an} * (a - a_n)$$

$$Th = Th_n = Th_0 + k_{ao} * (a - a_0) + k_{a1} * (a - a_1) \ldots + k_{an} * (a - a_n)$$

"$Th_0$" ist der minimale Schwellenwert. Der Wert "$a_0$" stellt den Eingangswert dar, bei dem die Progression einsetzt, die Größen "$a_{1\ldots n}$" sind Fahrzeugverzögerungswerte, bei den die Progression umgeschaltet wird, "a", identisch mit $a_{cc}$ in Fig.3, ist die aktuelle Fahrzeugverzögerung und "$k_{a0\ldots an}$" sind Bewertungsfaktoren. Damit die einzelnen Teile dieses Polynoms berücksichtigt werden, muss die aktuelle Fahrzeugverzögerung größer sein als der jeweilige Umschaltwert.

Für die Erhöhung der Gegenkopplung gilt das folgende; die Erhöhung der Gegenkopplung wird nach der Gleichung (2) durchgeführt:

$$F_0 = Basiswert\ der\ Gegenkopplung$$

$$F_1 = F_0 + k_{g0} * (a - a_0)$$

$$F = F_n = F_0 + F_1 \ldots + k_{gn} * (a - a_n) \tag{2}$$

"F" wird als progressives Feedback bezeichnet. "$F_0 = Feedback_0$" ist der minimale Gegenkopplungswert. Der Wert "$a_0$" stellt den Eingangswert dar, bei dem die Progression einsetzt, die Größen "$a_{1\ldots n}$" sind Fahrzeugverzögerungswerte, bei denen die Progression umgeschaltet wird, "a" ist die aktuelle Fahrzeugverzögerung und "$-k_{g0\ldots gn}$" sind Bewertungsfaktoren. Die einzelnen Teile dieses Polynoms kommen zur Geltung, sobald die aktuelle Fahrzeugverzögerung größer wird als der jeweilige Umschaltwert.

Die Anpassung bzw. Erhöhung der Gegenkopplung, ist in manchen Fällen die bevorzugte, einfachere Variante im Vergleich zur Erhöhung der Beschleunigungsschwellen, weil die Beeinflussung anhand der Fahrzeugverzögerung an einer zentralen Stelle im Regelungssystem erfolgen kann.

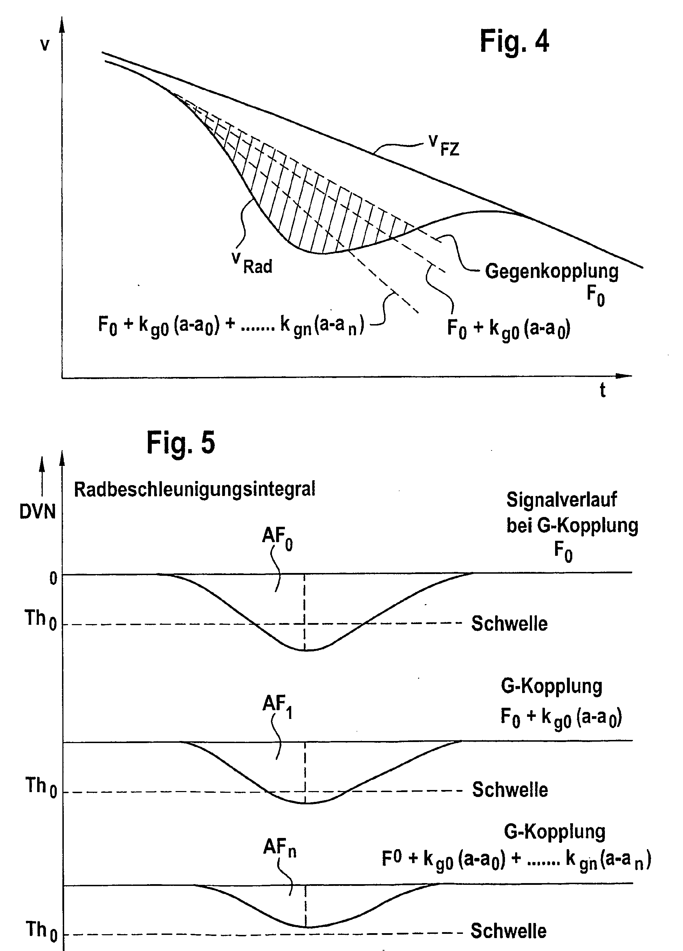

Fig. 4 dient zur Veranschaulichung der Funktion und der Wirkungsweise einer progressiven Gegenkopplung. Die gestrichelt dargestellten Geraden in Fig. 4 gelten bei Einbeziehung der einzelnen Terme $F_0$, $F_1$, $F_n$ der vorgenannten Gegenkopplungsfunktion F.

In Fig. 5 sind die Radbeschleunigungsintegrale DVN bei dem Kurvenverlauf bzw. Regelungsfall nach Fig. 4 dargestellt. Für die Basisschwelle $Th_0$ könnte beispielsweise einen Wert von -4km/h vorgesehen werden.

Bei Berücksichtigung nur des Gegenkopplungswertes $F_O$ symbolisiert die schraffierte, von der Radgeschwindigkeit $V_{Rad}$ und der Geraden $F_O$ Fläche begrenzte Fläche $AF_0$ das zur Bestimmung der ABS-Eintrittsschwelle maßgebliche Radbeschleunigungsintegral DVN (Fig. 5). Die Fläche $AF_1$, $AF_n$ wird kleiner, wenn die weiteren Terme der Gegenkopplungsgleichung zur Geltung gelangen.

In beiden Fällen, d.h. sowohl bei der progressiven Erhöhung der Regelungsschwellen als auch bei der progressiven Erhöhung der Gegenkopplung, ist die Progression als Summe mehrerer linearen Funktionen angegeben. Natürlich kann an dieser Stelle jede andere mathematische Progressionsform gewählt werden; die einfache Form erwies sich in der Praxis als völlig ausreichend.

## Patentansprüche

1. Verfahren zur Verbesserung des Regelverhaltens eines Blokkierschutzregelungssystems (ABS) bei Bremsvorgängen auf hohem Reib(bei)wert, bei dem Bremsdruckregelungsschwellen, insbesondere die Eingriffs- oder Einsatzschwellen des Blockierschutzregelungssystems (ABS), an die Haftungseigenschaften des jeweiligen Rades dynamisch angepasst werden, **dadurch gekennzeichnet, dass** entweder

die Regelungsschwellen, von denen das Einsetzen der Blockierschutzregelung abhängig ist, durch Erhöhung der Gegenkopplung nach der Beziehung

$$F = F_0 + k_{g0} * (a-a_0) + k_{g1} * (a-a_1).. + k_{gn} * (a-a_n) \qquad (1)$$

progressiv erhöht werden, wobei mit "$F_0$ = Feedback$_0$" der minimale Gegenkopplungswert bezeichnet ist, wobei "$a_0$" den Eingangswert der Fahrzeugverzögerung, bei dem die Progression einsetzt, darstellt, wobei die Größen "$a_{1...n}$" Fahrzeugverzögerungswerte sind, bei den die Progression umgeschaltet wird, und wobei "a" die aktuelle Fahrzeugverzögerung und "$k_{g0...gn}$" Bewertungsfaktoren sind, oder die Regelungsschwellen (Th), von denen das Einsetzen der Blockierschutzregelung abhängig ist, nach der Beziehung

$$Th = Th_0 + k_{ao} * (a-a_0) + k_{a1} * (a-a_1)...+ k_{an} * (a-a_n) \qquad (2)$$

progressiv erhöht werden, wobei "Th"$_0$ der minimale Schwellenwert ist, "$a_0$" den Eingangswert der Fahrzeugverzögerung, bei dem die Progression einsetzt, darstellt, wobei die Größen "$a_{1...n}$" Fahrzeugverzögerungswerte sind, bei den die Progression umgeschaltet wird, und wobei "a" die aktuelle Fahrzeugverzögerung und "$k_{a0...an}$" Bewertungsfaktoren sind.

## Claims

1. Method for improving the control response of an anti-lock control system (ABS) during braking operations at a high coefficient of friction, wherein brake pressure control thresholds, in particular the intervention or application thresholds of the anti-lock control system (ABS) are adapted dynamically to the adherence abilities of the respective wheel, **characterized in that** either the control thresholds, on which the commencement of anti-lock control depends, are raised progressively by increasing the negative feedback according to the relation

$$F = F_0 + k_{g0} * (a-a_0) + k_{g1} * (a-a_1)...+ k_{gn} * (a-a_n) \qquad (1),$$

where "$F_0$ = Feedback$_0$" refers to the minimum negative feedback value, where "$a_0$" represents the input value of the vehicle deceleration at which the progression commences, where the quantities "$a_{1...n}$" are vehicle deceleration values at which the progression is switched over, and where "$a$" is the current vehicle deceleration and "$k_{g0...gn}$" are valuation factors, or

the control thresholds (Th), on which the commencement of anti-lock control depends, are raised progressively according to the relation

$$Th = Th_0 + k_{a0} * (a-a_0) + k_{a1} *(a-a_1)...+ k_{an} * (a-a_n) \qquad (2),$$

where "Th"$_0$ is the minimum threshold value, "$a_0$" is the input value of the vehicle deceleration at which the progression commences, where the quantities "$a_{1...n}$" are vehicle deceleration values at which the progression is switched over, and where "$a$" is the current vehicle deceleration and "$k_{a0...an}$" are valuation factors.

## Revendications

1.  Procédé pour améliorer le comportement à la régulation d'un système de régulation d'antiblocage (ABS) lors de freinages avec coefficient de friction élevé, dans lequel des seuils de régulation de la pression de freinage, en particulier des seuils d'intervention ou d'utilisation du système de régulation d'antiblocage (ABS), sont adaptés de manière dynamique aux propriétés d'adhérence de chaque roue, **caractérisé en ce que** soit les seuils de régulation, desquels dépend l'activation de la régulation d'antiblocage, sont augmentés progressivement par augmentation de la contre-réaction selon la relation,

$$F = F_0 + k_{g0} * (a-a_0) + k_{g1} * (a-a_1).. + k_{gn} * (a-a_n) \qquad (1).$$

"$F_0$ = feedback$_0$" désignant la valeur minimale de la contre-réaction, "$a_0$" représentant la valeur d'entrée du ralentissement du véhicule pour laquelle s'instaure la progression, les grandeurs "$a_{1...n}$" étant des valeurs de ralentissement du véhicule pour lesquelles la progression est commutée, et "$a$" étant le ralentissement actuel du véhicule et "$k_{g0...gn}$" étant des facteurs d'évaluation, soit les seuils de régulation "Th", desquels dépend l'activation de la régulation d'antiblocage, sont augmentés progressivement selon la relation,

$$Th = Th_0 + k_{a0} * (a-a_0) + k_{a1} * (a-a_1)...+ k_{an} * (a-a_n) \qquad (2)$$

"$Th_0$" étant la valeur de seuil minimale, "$a_0$" représentant la valeur d'entrée du ralentissement du véhicule pour laquelle s'instaure la progression, les grandeurs "$a_{1...n}$" étant des valeurs de ralentissement du véhicule pour lesquelles la progression est commutée, et "$a$" étant le ralentissement actuel du véhicule et "$k_{a0...an}$" étant des facteurs d'évaluation.

A — Aktoren

B3 — Regelungsblock

B2 — Ermittlung der Gegenkopplung und / oder Schwellenbeeinflussung

B1 — Fahrzeugverzögerung

S1 — Rad 1 $v_{Rad}$, dv/dt

S2 — Rad 2 $v_{Rad}$, dv/dt

S3 — Rad 3 $v_{Rad}$, dv/dt

S4 — Rad 4 $v_{Rad}$, dv/dt

L1 — Längs-beschleunigungs-sensor

Fig. 1

# Fig. 2

$v_{FZ}$

$v_{Rad}$

v

t

# Fig. 3

$\dot{v}_{Rad} = a$

a

t

$Th_0$ — — — — — — — — — — — Schwelle $Th_0$

$Th_1$ — — — — — — — — — — $Th_0 + k_{ao}(a-a_0)$

$Th_n$ — — — — — — — — — — $Th_0 + ....... k_{an}(a-a_n)$

## Fig. 4

$v$

$v_{FZ}$

$v_{Rad}$

Gegenkopplung
$F_0$

$F_0 + k_{g0}(a-a_0) + \ldots\ldots k_{gn}(a-a_n)$

$F_0 + k_{g0}(a-a_0)$

$t$

## Fig. 5

DVN

Radbeschleunigungsintegral

Signalverlauf
bei G-Kopplung
$F_0$

$AF_0$

0

$Th_0$ ——— Schwelle

G-Kopplung
$F_0 + k_{g0}(a-a_0)$

$AF_1$

$Th_0$ ——— Schwelle

G-Kopplung
$F0 + k_{g0}(a-a_0) + \ldots\ldots k_{gn}(a-a_n)$

$AF_n$

$Th_0$ ——— Schwelle